# EUROPÄISCHE PATENTSCHRIFT

(11) **EP 3 982 026 B1**
(45) Veröffentlichungstag und Bekanntmachung des Hinweises auf die Patenterteilung: **12.06.2024**
(21) Anmeldenummer: 21188204.8
(22) Anmeldetag: 28.07.2021
(51) Int. Cl.: F16L 21/03, F16L 47/08

(54) **VERFAHREN ZUR ANPRESSKRAFTVERSTÄRKUNG EINER DICHTUNG UND ROHRSYSTEM UFASSEND EINEN ANPRESSKRAFTVERSTÄRKER**
METHOD FOR INCREASING THE PRESSURE FORCE OF A SEAL AND PIPE SYSTEM COMPRISING A CONTACT PRESSURE BOOSTER
PROCÉDÉ DE RENFORCEMENT DE LA FORCE DE PRESSION D'UN JOINT D'ÉTANCHÉITÉ ET SYSTÉME DE TUYAUX COMPRENANT UN RENFORCEUR DE FORCE DE PRESSION

(30) Priorität: 08.10.2020 DE 102020126338
(43) Veröffentlichungstag der Anmeldung: 13.04.2022
(73) Patentinhaber: Poloplast GmbH & Co. KG, 4060 Leonding (AT)
(72) Erfinder: MAYRBÄURL, Erwin, 4481 Asten (AT); HEINDL, Andreas, 4030 Linz (AT)
(74) Vertreter: Hoefer & Partner Patentanwälte mbB

(56) Entgegenhaltungen:
- DE-A1- 2 845 308
- DE-U1- 9 414 741
- US-A1- 2014 217 726

## Beschreibung

Die Erfindung betrifft ein Verfahren zur Anpresskraftverstärkung einer Dichtung in einer Rohrmuffe. Dabei handelt es sich insbesondere um eine Rohrmuffe mit einer nicht austauschbaren Dichtung. Die Rohrmuffe und der Anpresskraftverstärker sind insbesondere Bestandteil eines drucklosen Rohrsystems, wie beispielsweise eines Abflussrohrsystems.

US 2014/217726 A1 zeigt eine Verbindungsvorrichtung und ein Herstellungsverfahren zur Verwendung an Rohren. Zur Verbindung wird ein ringförmiger Körper verwendet, der einen mittleren Abschnitt und zwei seitliche Abschnitte umfasst. Die beiden seitlichen Abschnitte weisen einen höheren Härtegrad als der mittlere Abschnitt auf.

DE 28 45 308 A1 zeigt ein Fitting aus formstabilem Kunststoff für Rohrverbindungen mit mindestens einem muffenartigen Endstück, das in ein glattes Anschluss-Rohrstück unter Zwischenschaltung eines elastischen Dichtungsrings einschiebbar ist. Der Dichtungsring weist einen Y-förmigen Querschnitt auf.

DE 94 14 741 U1 zeigt eine Anschlussvorrichtung für einen Sanitärartikel, insbesondere ein Klosett, mit einem Anschlussrohr, auf das an einem am Sanitärartikel anzuschließenden Ende eine Dichtung mit einer innenliegenden Dichtlippe, einem sich radial nach außen erstreckenden Flansch und einer Außenmanschette aufgesetzt ist, wobei auch das Anschlussrohr an seinem anzuschließenden Ende ein Sicherungsring aufgesetzt ist.

Übliche Rohrmuffen weisen eine Rohrsicke auf, in welche ein Dichtring eingelegt wird. Durch Alterung verliert das Elastomer über Jahre hinweg seine Elastizität und der Anpressdruck und die Flexibilität der Dichtung sinken. Wird die Rohrverbindung demontiert und wieder zusammengebaut, können gegebenenfalls bestehende Ovalitäten im Rohrsystem, nach Wiederherstellung der Verbindung, am Umfang zur ursprünglichen Lage versetzt positioniert werden. Aufgrund der gesunkenen Elastizität des aus Elastomer gefertigten Dichtrings, können die durch die Versetzung der Ovalitäten am Umfang entstehenden Spalte nicht mehr mit genügend Anpressdruck ausgeglichen werden. Wird nach Jahren die Rohrverbindung gelöst, wird deshalb üblicherweise vor Wiederherstellung der Rohrverbindung der Dichtring getauscht, um Undichtheiten der neuen Rohrverbindung zu verhindern.

Eine vorbekannte Rohrmuffe, wie sie in Verbindung mit vorliegender Erfindung zum Einsatz kommen kann, ist in EP 1 678 439 A1 gezeigt. Bei dieser Rohrmuffe, die ohne Sicke ausgebildet ist, ist die Dichtung integraler Bestandteil der Rohrmuffe: Die Rohrmuffe umfasst zwei steife Ringe, die über einen elastischen Zwischenring mit nach innen ragender Dichtung verbunden sind. In die Rohrmuffe wird das Spitzende eines Rohrs eingesteckt. Eine derartige Dichtung, welche fixer Bestandteil der Rohrmuffe ist, kann bei Demontage der Rohrverbindung nicht mehr ausgetauscht werden. Durch den lang anhaltenden Anpressdruck auf die Dichtung, weicht die freiliegende Fläche des Zwischenrings konkav nach außen aus und verbleibt aufgrund von Relaxationen im Elastomer in dieser Position. Aufgrund der Relaxationen des thermoplastischen Elastomers können die durch Versetzung der Ovalitäten am Umfang entstehenden Spalte nicht mehr mit genügend Anpressdruck ausgeglichen werden.

Um diesen Nachteil zu beheben, ist es Aufgabe vorliegender Erfindung, ein Verfahren zur Anpresskraftverstärkung einer Dichtung in einer Rohrmuffe anzugeben, das eine dichte und betriebssichere Rohrverbindung ermöglicht. Insbesondere soll bei einer Rohrmuffe mit nach außen freiliegendem elastischen Zwischenring und nicht-austauschbarer Dichtung auch nach langfristigem Einsatz bei erneutem Steckvorgang eine dichte Verbindung möglich sein.

Die Lösung der Aufgabe erfolgt durch die Merkmale der unabhängigen Ansprüche. Die abhängigen Ansprüche haben weitere Ausgestaltungen der Erfindung zum Gegenstand.

Die Erfindung kommt insbesondere an folgender Rohrmuffe zum Einsatz: Die Rohrmuffe ist vorzugsweise Teil eines drucklosen Rohrsystems, wie beispielsweise eines Abflussrohrsystems. Die Rohrmuffe weist vorzugsweise zwei steife Ringe auf, die über einen elastischen Zwischenring miteinander verbunden sind. Der Zwischenring ist zwischen dem ersten Ring und dem zweiten Ring angeordnet. Der erste Ring und der zweite Ring sind insbesondere ausschließlich über den elastischen Zwischenring miteinander verbunden. Der Zwischenring ist vorzugsweise aus TPE (Thermoplastischer Elastomer) gefertigt. Der Zwischenring ist vorzugsweise an einem Stirnende mit dem ersten Ring und am gegenüberliegenden Stirnende mit dem zweiten Ring verbunden. Des Weiteren umfasst die Rohrmuffe eine ringförmige, radial nach innen ragende Dichtung, die insbesondere einstückiger Bestandteil des Zwischenrings ist. Die Dichtung ist insbesondere eine ringförmige Dichtlippe als integraler Bestandteil des Zwischenrings. Die Rohrmuffe ist zum Einstecken eines Spitzendes eines Rohrs ausgebildet. Dieses einzusteckende Rohr wird über den ersten Ring durch die Dichtung hindurch bis in den zweiten Ring eingesteckt.

Der elastische Zwischenring ist insbesondere direkt und einstückig mit dem ersten Ring und dem zweiten Ring ausgebildet. Insbesondere kommt hier ein einstückiges Herstellungsverfahren zur Anwendung, bei dem in einem 2-Komponenten-Verfahren die beiden steifen Ringe und der elastische Zwischenring hintereinander geformt werden. Alternativ ist es auch möglich, den Zwischenring mit den beiden steifen Ringen zu verkleben oder den Zwischenring nur mit einem der beiden steifen Ringe in einem 2-Komponenten-Verfahren zu spritzen, um mit dem jeweils anderen steifen Ring zu verkleben.

Die im Rahmen der Erfindung gewählten Begriffe "elastisch" und "steif" beziehen sich auf die auftretende Elastizität und elastische Verformung bei der Verwendung der Rohrmuffe, nicht jedoch auf die Tatsache, dass ein steifer Ring keinerlei Elastizität im Sinne der klassischen Mechanik aufweisen dürfte.

Der elastische Zwischenring ist an seiner radial äußeren Seite vorzugsweise durch kein steifes Element begrenzt - solange der hier beschriebene Anpresskraftverstärker noch nicht aufgesetzt ist. Dadurch kann sich der elastische Zwischenring radial nach außen ausdehnen, beispielsweise, wenn das einzusteckende Rohr eingesteckt wird und sich dabei die Dichtung verformt und vorspannt. Aber auch durch den langanhaltenden, von innen wirkenden Anpressdruck auf die Dichtung, erfolgt eine Verformung der radial außen freiliegenden Fläche des Zwischenrings konkav nach außen.

Das erfindungsgemäße Verfahren sieht vor, dass ein ringförmiger Anpresskraftverstärker auf die Außenseite des Zwischenrings aufgebracht wird, um so den Zwischenring wieder nach innen zu deformieren. Zusätzlich dient der aufgebrachte Anpresskraftverstärker auf der Außenseite des Zwischenrings auch dazu, eine erneute Deformation des Zwischenrings nach außen zu verhindern.

Insbesondere wird durch das Aufbringen des Anpresskraftverstärkers der nach außen gewölbte Bereich des Zwischenrings wieder radial nach innen gedrückt, so dass die Dichtung, welche sich radial innen am Zwischenring befindet, wieder auf das eingesteckte Rohr gepresst wird. Durch diese Volumenreduzierung des Einbauvolumens des Zwischenrings samt Dichtung wird der Anpressdruck der Dichtung auf das eingesteckte Rohr wesentlich erhöht.

In bevorzugter Ausführung ist vorgesehen, dass das Verfahren folgende Schritte umfasst: Zunächst erfolgt ein Demontieren einer bereits benutzten Rohrmuffe. Bei dieser Rohrmuffe handelt es sich um eine der vorab beschriebenen Rohrmuffen mit der nicht auswechselbaren Dichtung am Zwischenring. Unter "Demontieren" ist zu verstehen, dass das eingesteckte Rohr aus der Rohrmuffe herausgezogen wird. Daraufhin erfolgt, selbstverständlich ohne Wechseln der nicht-auswechselbaren Dichtung, das Aufbringen des Anpresskraftverstärkers auf die Rohrmuffe, so dass die Rohrmuffe erneut verwendet werden kann. Insbesondere ist dabei vorgesehen, dass der Anpresskraftverstärker auf die Rohrmuffe aufgebracht wird, bevor das Spitzende des benutzten Rohrs oder eines anderen Rohres wieder in die Rohrmuffe eingesteckt wird.

In einer alternativen Durchführung des Verfahrens erfolgt das Aufbringen des Anpresskraftverstärkers auf die bereits benutzte Rohrmuffe, ohne einer Demontage der Rohrmuffe. Dadurch lässt sich bei einer undichten Rohrverbindung der Anpressdruck auf die Dichtung erhöhen, um wieder eine möglichst dichte Verbindung zu erreichen. Insbesondere wird hierbei ein Anpresskraftverstärker verwendet, dessen Umfang bzw. Innendurchmesser reduzierbar ist - die genaue Ausgestaltung, beispielsweise als Kabelbinder oder Rohrklemme, wird noch erläutert.

Bevorzugt ist vorgesehen, dass die Rohrmuffe bei der ersten Montage ohne äußerer Begrenzung des Zwischenrings, insbesondere ohne Anpresskraftverstärker, montiert wurde. Insbesondere bei der erstmaligen Verwendung ist eine solche äußere Begrenzung des Zwischenrings vorteilhafterweise zu vermeiden, so dass sich dabei der elastische Zwischenring radial nach außen ausdehnen kann, beispielsweise, wenn das Spitzende eingesteckt wird. Eine Einfassung des elastischen Zwischenrings mit einem steifen Material würde bei der erstmaligen Montage in ungewollter Weise die freie Beweglichkeit des elastischen Zwischenrings einschränken. Bei der Wiederverwendung bzw. der erneuten Verwendung der Rohrmuffe ist jedoch die vorab beschriebene Ovalität zu berücksichtigen, so dass hierbei die steife äußere Begrenzung des Zwischenrings mit dem Anpresskraftverstärker sich positiv auf die Rohrverbindung auswirkt.

Der verwendete Anpresskraftverstärker ist in seiner axialen Ausdehnung, bezogen auf die Längsachse der Rohrmuffe, vorzugsweise breiter als der Zwischenring. Es ist bevorzugt vorgesehen, dass der Anpresskraftverstärker so positioniert wird, dass er in axialer Richtung zusätzlich zum Zwischenring auch zumindest einen Teil des ersten steifen Rings und/oder zumindest einen Teil des zweiten steifen Rings überdeckt. Der erste steife Ring ist in axialer Richtung relativ kurz ausgebildet und kann durchaus vollständig von dem Anpresskraftverstärker überdeckt werden - zumal der Anpresskraftverstärker vorzugsweise den ersten Ring vollständig übergreift und mit einem optionalen Anschlag stirnseitig am ersten Ring anliegt. Der zweite steife Ring hingegen ist im Regelfall relativ lang und geht über eine Verjüngung in einen Rohrfortsatz über. Entsprechend wird der Anpresskraftverstärker den zweiten axialen Ring nur teilweise, wenn überhaupt, überdecken.

Für die Ausgestaltung des Anpresskraftverstärkers sind grundsätzlich zwei Varianten vorgesehen:
Gemäß der ersten Variante wird ein geschlossener Anpressring verwendet. Der Anpressring ist dabei vollumfänglich ausgebildet und in seinem Umfang bzw. seinem Innendurchmesser nicht variabel. Dieser Anpressring wird insbesondere noch bevor das Spitzende erneut eingesteckt wird, in axialer Richtung auf die Rohrmuffe aufgeschoben. Versuche an einer künstlich gealterten Rohrverbindung haben gezeigt, dass mit dem Anpressring die Auswinkelbarkeit von 2,5° wieder auf 5° in alle Richtungen verbessert werden konnte.

In der zweiten Variante ist ein Anpresskraftverstärker vorgesehen, dessen Umfang bzw. Innendurchmesser reduzierbar ist. Dieser Anpresskraftverstärker ist beispielsweise als Kabelbinder oder Rohrklemme ausgebildet. Die Rohrklemme wiederum kann eine Bandschelle umfassen, deren Band, beispielsweise mittels einer Schraube, im Durchmesser reduzierbar ist. Alternativ kann die Rohrklemme beispielsweise zwei miteinander verschraubte Halbschellen umfassen. Sowohl als Kabelbinder als auch Rohrklemme, ist es möglich, den Anpresskraftverstärker radial außen auf den Zwischenring aufzusetzen und dabei den Zwischenring nach innen zu deformieren, wodurch wiederum die Anpresskraft der Dichtung erhöht werden kann.

Im Folgenden wird insbesondere die erste Variante beschrieben, wonach der Anpresskraftverstärker als Anpressring ausgebildet ist.

Die Erfindung umfasst ferner ein Rohrsystem, insbesondere druckloses Rohrsystem. Das Rohrsystem umfasst die bereits beschriebene Rohrmuffe sowie den beschriebenen Anpresskraftverstärker, ausgebildet nach der ersten Variante, also als geschlossener Anpressring, oder nach der zweiten Variante, also ausgebildet als Kabelbinder oder Rohrklemme.

Die Erfindung umfasst den Anpresskraftverstärker als Bestandteil des Rohrsystems zum Aufstecken auf die vorab beschriebene Rohrmuffe. Der Anpresskraftverstärker ist insbesondere zur Durchführung des beschriebenen Verfahrens ausgebildet. Der Anpresskraftverstärker ist als ein umfänglich geschlossener Anpressring zum Aufstecken in axialer Richtung auf die Rohrmuffe ausgebildet.

Vorzugsweise ist der Anpressring einstückig, beispielsweise ein Spritzgussteil.

Der als Anpressring ausgebildete Anpresskraftverstärker weist vorzugsweise einen ersten Abschnitt mit einem ersten Innendurchmesser auf. Der erste Abschnitt ist so ausgebildet, dass er auf dem ersten steifen Ring der Rohrmuffe positionierbar ist. Der erste Abschnitt kann vollumfänglich oder durchbrochen ausgestaltet sein.

Ferner ist bevorzugt vorgesehen, dass der Anpressring einen Anpressabschnitt mit zweitem Innendurchmesser aufweist. Der Anpressabschnitt ist zur Positionierung auf dem Zwischenring ausgebildet. Insbesondere ist der Anpressabschnitt vollumfänglich ausgestaltet. In optionaler Ausgestaltung ist der zweite Innendurchmesser kleiner als der erste Innendurchmesser.

Die beiden Innendurchmesser des Anpressrings sind insbesondere etwas größer als der Außendurchmesser des ersten Ringes der Muffe, sodass der Anpressring gut aufgesteckt werden kann.

Insbesondere ist die Innenseite des Anpressabschnitts konkav ausgebildet. Mit diesem konkaven Bereich wird der Zwischenring radial nach innen gedrückt.

Um den Anpressring möglichst leicht aufschieben zu können, ist bevorzugt vorgesehen, dass dieser einen Endabschnitt mit Innenkonus aufweist. Der Anpressabschnitt befindet sich dabei zwischen dem ersten Abschnitt und dem Endabschnitt.

Am axial äußeren Ende des ersten Abschnitts befindet sich vorzugsweise ein Anschlag. Der Anschlag ragt radial nach innen. Bevorzugt ist der Anschlag vollumfänglich ausgestaltet. Der Anschlag ist zum Anliegen an einem Stirnende der Rohrmuffe ausgebildet. Durch Positionierung des Anschlags wird sichergestellt, dass der Anpressring, nach vollständigem Aufschieben, so positioniert ist, dass der Anpressabschnitt sich radial außerhalb des Zwischenrings befindet. Weitere Einzelheiten, Vorteile und Merkmale der vorliegenden Erfindung ergeben sich aus nachfolgender Beschreibung eines Ausführungsbeispiels anhand der Zeichnungen. Dabei zeigt:
- Fig. 1: eine Rohrmuffe im unbelasteten Zustand,
- Fig. 2: eine Rohrmuffe nach langer Belastungsdauer, und
- Fig. 3: die Rohrmuffe des erfindungsgemäßen Rohrsystems mit erfindungsgemäßem Anpresskraftverstärker gemäß dem Ausführungsbeispiel.

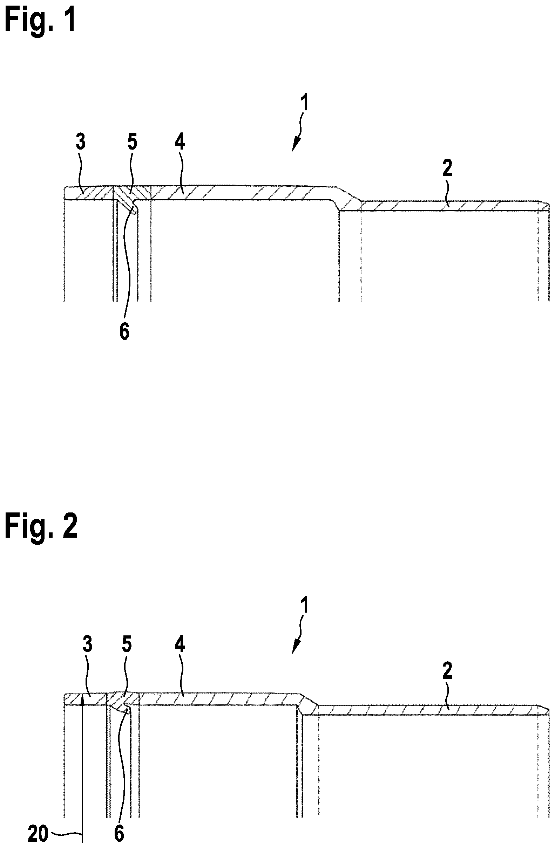

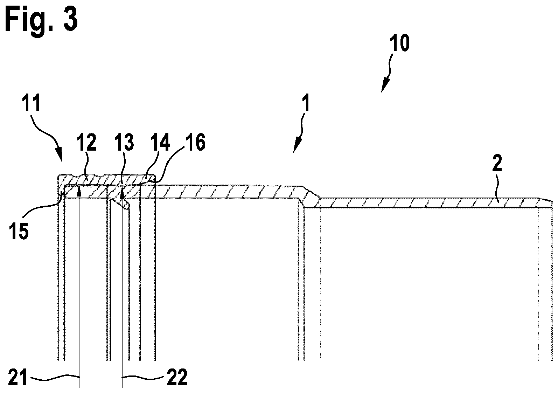

Fig. 1 zeigt eine Rohrmuffe 1 als Bestandteil eines Rohrsystems 10. Das Rohrsystem 10 umfasst neben der Rohrmuffe 1 einen Anpresskraftverstärker 11 (Fig. 3), hier ausgebildet als Anpressring, der ein geschlossener Ring ist und sich somit vollumfänglich um die Rohrmuffe 1 erstreckt.

Die Rohrmuffe 1 geht dabei von ihrem Muffenbereich mit vergrößertem Durchmesser über eine Verjüngung in einen Rohrfortsatz 2 über. Weiterer Bestandteil des Rohrsystems 10 kann ein nicht dargestelltes Rohr sein, dessen Spitzende in die Rohrmuffe 1 einzustecken ist.

Die Rohrmuffe umfasst einen ersten steifen Ring 3 und einen zweiten steifen Ring 4 sowie einen elastischen Zwischenring 5. Der elastische Zwischenring 5 umfasst eine radial nach innen ragende Dichtung 6, hier ausgebildet als Dichtlippe. Der Zwischenring 5 und die Dichtung 6 sind einstückig gefertigt.

Der erste Ring 3 ist lediglich über den elastischen Zwischenring 5 mit dem zweiten Ring 4 verbunden. Der zweite Ring 4 geht in den bereits erwähnten Rohrfortsatz 2 über.

Der erste und der zweite Ring 3, 4 sind steif ausgebildet. Insbesondere sind die beiden Ringe 3, 4 wesentlich steifer als der Zwischenring 5. Der Zwischenring 5 ist elastisch ausgebildet. Insbesondere ist der Zwischenring 5 wesentlich elastischer als die beiden Ringe 3, 4.

Über den ersten Ring 3 durch die Dichtung 6 hindurch bis in den zweiten Ring 4 ist das nicht dargestellte Spitzende eines Rohrs einsteckbar. Dabei verformt sich die Dichtung 6 radial nach außen.

Fig. 2 zeigt die Rohrmuffe 1 mit langzeitbelasteter Dichtung 6. Insbesondere handelt es sich hierbei um eine Langzeitbelastung im Rahmen von mehreren Monaten oder mehreren Jahren. Wie Fig. 2 zeigt, ist die radiale äußere Fläche des Zwischenrings 5 konvex nach außen verformt. Durch den Steckvorgang drückt die Dichtung 6 auf den restlichen Bestandteil des Zwischenrings 5; dadurch verformt sich die radiale Außenfläche des Zwischenrings 5 zu einer konvexen Fläche und die Länge des Zwischenrings wird aufgrund der Volumenkonstanz verkürzt. Dadurch vergrößert sich der Innendurchmesser der Dichtung 6.

Zu beachten ist, dass die Darstellung in Fig. 2, insbesondere die Verformung des Zwischenrings 5 samt Dichtung 6, rein schematisch und nicht maßstabsgetreu ist.

Fig. 3 zeigt die langzeitbelastete Rohrmuffe 1 mit dem aufgebrachten Anpresskraftverstärker 11, hier ausgebildet als Anpressring.

Der Anpressring ist insbesondere einteilig ausgestaltet, beispielsweise als Spritzgussteil oder aus Metall. Der Anpressring umfasst einen ersten Abschnitt 12, einen Anpressabschnitt 13, einen Endabschnitt 14 und einen Anschlag 15. Der Anpressabschnitt 13 befindet sich, bezogen auf die axiale Richtung bzw. Längsachse, zwischen dem ersten Abschnitt 12 und dem Endabschnitt 14. Am axial äußeren Ende des ersten Abschnitts 12 befindet sich der Anschlag 15, der sich radial nach innen erstreckt und zum Anliegen am Stirnende der Rohrmuffe 1 ausgebildet ist.

Der erste Abschnitt 12 überdeckt den ersten steifen Ring 3. Der Anpressabschnitt 13 befindet sich radial außerhalb des elastischen Zwischenrings 5. Der Endabschnitt 14 erstreckt sich teilweise über dem zweiten steifen Ring 4.

Für ein einfaches Aufschieben befindet sich am Endabschnitt 14 ein Innenkonus 16. Der Innenkonus 16 kann auch als Anlaufkonus bezeichnet werden.

Die Rohrmuffe 1, insbesondere der erste Ring 3, weist einen Muffenaußendurchmesser20 auf. Dieser Muffenaußendurchmesser 20 entspricht in etwa einem ersten Innendurchmesser 21 am ersten Abschnitt 12 des Anpressrings. Für ein einfaches Aufschieben des Anpressrings sollte der erste Innendurchmesser 21 geringfügig größer als der Muffenaußendurchmesser 20 sein.

Der Anpressabschnitt 13 weist einen zweiten Innendurchmesser 22 auf. Vorzugsweise ist der zweite Innendurchmesser 22 kleiner als der erste Innendurchmesser 21. Für ein einfaches Aufschieben des Anpressrings sollte auch der zweite Innendurchmesser 22 geringfügig größer als der Muffenaußendurchmesser 20 sein.

Darüber hinaus ist vorzugsweise die Innenfläche des Anpressabschnitts 13 konvex ausgebildet. Mit dem so ausgebildeten Anpressabschnitt 13 kann der Zwischenring 5 sehr effektiv nach innen gedrückt werden, um die Anpresskraft der Dichtung 6 zu erhöhen.

### Bezugszeichenliste

- 1: Rohrmuffe
- 2: Rohrfortsatz
- 3: erster steifer Ring
- 4: zweiter steifer Ring
- 5: elastischer Zwischenring
- 6: Dichtung
- 10: Rohrsystem
- 11: Anpresskraftverstärker
- 12: erster Abschnitt
- 13: Anpressabschnitt
- 14: Endabschnitt
- 15: Anschlag
- 16: Innenkonus
- 20: Muffenaußendurchmesser
- 21: erster Innendurchmesser
- 22: zweiter Innendurchmesser

## Patentansprüche

1. Verfahren zur Anpresskraftverstärkung einer Dichtung (6) in einer Rohrmuffe (1),
• wobei die Rohrmuffe (1) zwei steife Ringe (3, 4) umfasst, die über einen nach außen freiliegenden, elastischen Zwischenring (5) verbunden sind und am Zwischenring (5) eine nach innen ragende Dichtung (6) angeordnet ist,
• wobei die Rohrmuffe (1) zum Einstecken eines Spitzendes eines Rohrs ausgebildet ist und das einzusteckende Rohr über den ersten Ring (3) durch die Dichtung (6) hindurch bis in den zweiten Ring (4) eingesteckt wird, und
• wobei das Verfahren folgenden Schritt umfasst: Aufbringen eines ringförmigen Anpresskraftverstärkers (11) auf die Außenseite des Zwischenrings (5) zur Deformation des Zwischenrings (5) nach innen.

2. Verfahren nach Anspruch 1, umfassend folgende Schritte:
• Demontieren einer bereits benutzten Rohrmuffe (1), und, ohne Wechseln der Dichtung (6), Aufbringen des Anpresskraftverstärkers (11) auf die Rohrmuffe (1) zur erneuten Verwendung der Rohrmuffe (1),
• oder Aufbringen des Anpresskraftverstärkers (11) auf die bereits benutzte Rohrmuffe (1) ohne Demontage der Rohrmuffe (1) zur weiteren Verwendung der Rohrmuffe (1).

3. Verfahren nach Anspruch 2, wobei die Rohrmuffe (1) bei der ersten Montage ohne äußerer Begrenzung des Zwischenrings (5), insbesondere ohne Anpresskraftverstärker (11), montiert wurde.

4. Verfahren nach einem der vorhergehenden Ansprüche, wobei der Anpresskraftverstärker (11) positioniert wird, um in axialer Richtung zusätzlich zum Zwischenring (5) auch zumindest einen Teil des erstens steifen Rings (3) und/oder zumindest einen Teil des zweiten steifen Rings (4) zu überdecken.

5. Verfahren nach einem der vorhergehenden Ansprüche, wobei als Anpresskraftverstärker (11) ein vollumfänglich geschlossener Anpressring verwendet wird, der in axialer Richtung auf die Rohrmuffe (1) aufgeschoben wird.

6. Verfahren nach einem der Ansprüche 1 bis 4, wobei der Umfang des Anpresskraftverstärkers (11) reduzierbar ist, wobei als Anpresskraftverstärker (11) vorzugsweise ein Kabelbinder oder eine Rohrklemme, insbesondere mit Bandschelle oder zwei Halbschellen, verwendet wird.

7. Rohrsystem (10), insbesondere druckloses Rohrsystem, umfassend
• eine Rohrmuffe (1) mit zwei steifen Ringen (3, 4), die über einen nach außen freiliegenden, elastischen Zwischenring (5) verbunden sind und am Zwischenring (5) eine nach innen ragende Dichtung (6) angeordnet ist, und
• wobei die Rohrmuffe (1) zum Einstecken eines Spitzendes eines Rohrs ausgebildet ist und das einzusteckende Rohr über den ersten Ring (3) durch die Dichtung (6) hindurch bis in den zweiten Ring (4) einsteckbar ist, und
• einen Anpresskraftverstärker (11), der als vollumfänglich geschlossener Anpressring zum Aufstecken in axialer Richtung auf die Rohrmuffe (1) auf die Außenseite des Zwischenrings (5) ausgebildet ist.

8. Rohrsystem nach Anspruch 7,
• wobei der Anpressring einen ersten Abschnitt (12) mit erstem Innendurchmesser (21) zur Positionierung auf dem ersten steifen Ring (3),
• und einen Anpressabschnitt (13) mit zweitem Innendurchmesser (22) zur Positionierung auf dem Zwischenring (5) umfasst,
• wobei der erste Innendurchmesser (21) größer ist als der zweite Innendurchmesser (22).

9. Rohrsystem nach Anspruch 8, wobei die Innenseite des Anpressabschnitts (13) konkav ausgebildet ist.

10. Rohrsystem nach einem der Ansprüche 8 oder 9, wobei der Anpressring einen Endabschnitt (14) mit Innenkonus (16) aufweist, wobei der Anpressabschnitt (13) zwischen dem ersten Abschnitt (12) und dem Endabschnitt (14) angeordnet ist.

11. Rohrsystem nach einem der Ansprüche 7 bis 10, wobei der Anpressring einen Anschlag (15), insbesondere in vollumfänglicher Ausgestaltung, zum Anliegen an einem Stirnende der Rohrmuffe (1) umfasst.

## Claims

1. A method for increasing press-on force of a seal (6) in a pipe sleeve (1),
- wherein the pipe sleeve (1) comprises two rigid rings (3, 4), which are connected above an outwardly exposed, elastic intermediate ring (5) and an inwardly projecting seal (6) is arranged at the intermediate ring (5),
- wherein the pipe sleeve (1) is formed for inserting a tip end of a pipe and the pipe to be inserted is inserted above the first ring (3) through the seal (6) into the second ring (4), and
- wherein the method comprises the following step: arranging an annular press-on force amplifier (11) onto the outside of the intermediate ring (5) to deform the intermediate ring (5) inwardly.

2. The method according to claim 1, comprising following steps:
- dismantling an already used pipe sleeve (1), and, without changing the seal (6), arranging the press-on force amplifier (11) onto the pipe sleeve (1) for renewed use of the pipe sleeve (1),
- or arranging the press-on force amplifier (11) onto the already used pipe sleeve (1) without dismantling the pipe sleeve (1) for further use of the pipe sleeve (1).

3. The method according to claim 2, wherein the pipe sleeve (1) was assembled during the first assembly without external limitation of the intermediate ring (5), in particular without press-on force amplifier (11).

4. The method according to any of the preceding claims, wherein the press-on force amplifier (11) is positioned to cover in axial direction, in addition to the intermediate ring (5), also at least part of the first rigid ring (3) and/or at least part of the second rigid ring (4).

5. The method according to any of the preceding claims, wherein a fully closed press-on ring is used as press-on force amplifier (11), which is pushed onto the pipe sleeve (1) in axial direction.

6. The method according to any of claims 1 to 4, wherein the circumference of the press-on force amplifier (11) is reducible, wherein a cable tie or a pipe clamp, in particular with band clamp or two half clamps, is preferably used as the press-on force amplifier (11).

7. A pipe system (10), in particular an unpressurised pipe system, comprising
- a pipe sleeve (1) with two rigid rings (3, 4), which are connected above an outwardly exposed, elastic intermediate ring (5) and an inwardly projecting seal (6) is arranged at the intermediate ring (5), and
- wherein the pipe sleeve (1) is formed for inserting a tip end of a pipe and the pipe to be inserted is insertable above the first ring (3) through the seal (6) into the second ring (4), and
- an press-on force amplifier (11), which is formed as a fully closed press-on ring for inserting in axial direction onto the pipe sleeve (1) at the outside of the intermediate ring (5).

8. The pipe system according to claim 7,
- wherein the press-on ring comprises a first section (12) with a first inner diameter (21) for positioning on the first rigid ring (3)
- and a press-on section (13) with second inner diameter (22) for positioning on the intermediate ring (5),
- wherein the first inner diameter (21) is larger than the second inner diameter (22).

9. The pipe system according to claim 8, wherein the inside of the press-on section (13) is formed to be concave.

10. The pipe system according to any of claims 8 or 9, wherein the press-on ring comprises an end portion (14) with inner cone (16), wherein the press-on portion (13) is arranged between the first portion (12) and the end portion (14).

11. The pipe system according to any of claims 7 to 10, wherein the press-on ring comprises a stop (15), in particular in a fully circumferential form, for abutting against a front end of the pipe sleeve (1).

## Revendications

1. Procédé pour l'amplification de force de pression d'un joint d'étanchéité (6) dans un manchon tubulaire (1),
• dans lequel le manchon tubulaire (1) comprend deux bagues (3, 4) rigides, qui sont reliées par l'intermédiaire d'une bague intermédiaire (5) élastique exposée à l'extérieur et un joint d'étanchéité (6) faisant saillie vers l'intérieur est disposé sur la bague intermédiaire (5),
• dans lequel le manchon tubulaire (1) est réalisé pour l'introduction d'un bout mâle d'un tube et le tube à introduire est introduit à travers le joint d'étanchéité (6) jusque dans la deuxième bague (4) par l'intermédiaire de la première bague (3), et
• dans lequel le procédé comprend l'étape suivante : l'application d'un amplificateur de force de pression (11) annulaire sur la face extérieure de la bague intermédiaire (5) pour la déformation de la bague intermédiaire (5) vers l'intérieur.

2. Procédé selon la revendication 1, comprenant les étapes suivantes :
• le démontage d'un manchon tubulaire (1) déjà utilisé, et, sans changement du joint d'étanchéité (6), l'application de l'amplificateur de force de pression (11) sur le manchon tubulaire (1) pour la réutilisation du manchon tubulaire (1),
• ou l'application de l'amplificateur de force de pression (11) sur le manchon tubulaire (1) déjà utilisé sans démontage du manchon tubulaire (1) pour la poursuite de l'utilisation du manchon tubulaire (1).

3. Procédé selon la revendication 2, dans lequel le manchon tubulaire (1) lors du premier montage a été monté sans délimitation extérieure de la bague intermédiaire (5), en particulier sans amplificateur de force de pression (11).

4. Procédé selon l'une quelconque des revendications précédentes, dans lequel l'amplificateur de force de pression (11) est positionné afin de recouvrir également au moins une partie de la première bague (3) rigide et/ou au moins une partie de la deuxième bague (4) rigide dans la direction axiale en plus de la bague intermédiaire (5).

5. Procédé selon l'une quelconque des revendications précédentes, dans lequel une bague de pression fermée sur toute sa périphérie, qui est poussée sur le manchon tubulaire (1) dans la direction axiale, est utilisée en tant qu'amplificateur de force de pression (11).

6. Procédé selon l'une quelconque des revendications 1 à 4, dans lequel la périphérie de l'amplificateur de force de pression (11) peut être réduite, dans lequel de préférence une attache de serrage ou un collier de tube, en particulier avec un collier de serrage ou deux demi-coupleurs, est utilisée comme amplificateur de force de pression (11).

7. Système de tube (10), en particulier système de tube sans pression, comprenant
• un manchon tubulaire (1) avec deux bagues (3, 4) rigides, qui sont reliées par l'intermédiaire d'une bague intermédiaire (5) élastique exposée à l'extérieur, et un joint d'étanchéité (6) faisant saillie vers l'intérieur est disposé sur la bague intermédiaire (5), et
• dans lequel le manchon tubulaire (1) est réalisé pour l'introduction d'un bout mâle d'un tube et le tube à introduire peut être introduit à travers le joint d'étanchéité (6) jusque dans la deuxième bague (4) par l'intermédiaire de la première bague (3), et
• un amplificateur de force de pression (11), qui est réalisé en tant que bague de pression fermée sur toute sa périphérie à pousser dans la direction axiale sur le manchon tubulaire (1) sur la face extérieure de la bague intermédiaire (5).

8. Système de tube selon la revendication 7,
• dans lequel la bague de pression comprend une première partie (12) avec un premier diamètre intérieur (21) pour le positionnement sur la première bague (3) rigide,
• et une partie de pression (13) avec un deuxième diamètre intérieur (22) pour le positionnement sur la bague intermédiaire (5),
• dans lequel le premier diamètre intérieur (21) est supérieur au deuxième diamètre intérieur (22).

9. Système de tube selon la revendication 8, dans lequel la face intérieure de la partie de pression (13) est réalisée de manière concave.

10. Système de tube selon l'une quelconque des revendications 8 ou 9, dans lequel la bague de pression présente une partie d'extrémité (14) avec un cône intérieur (16), dans lequel la partie de pression (13) est disposée entre la première partie (12) et la partie d'extrémité (14).

11. Système de tube selon l'une quelconque des revendications 7 à 10, dans lequel la bague de pression comprend une butée (15), en particulier dans la configuration sur toute la périphérie, à appliquer sur une extrémité frontale du manchon tubulaire (1).
